Europäisches Patentamt

European Patent Office

Office européen des brevets

(11) Publication number: **0 331 267**
**A1**

## EUROPEAN PATENT APPLICATION

(21) Application number: 89200501.8

(22) Date of filing: 28.02.89

(51) Int. Cl.⁴: **B29C 67/14 , C08J 5/04 , B29C 35/18 , //B29K79:00**

(30) Priority: 01.03.88 NL 8800519

(43) Date of publication of application:
06.09.89 Bulletin 89/36

(84) Designated Contracting States:
AT BE CH DE ES FR GB IT LI NL SE

(71) Applicant: STAMICARBON B.V.
Mijnweg 1
NL-6167 AC Geleen(NL)

(72) Inventor: Diderich, Johannes Philippus
Ludovicus Maria
Multatulilaan 13
NL-1215 BG Hilversum(NL)
Inventor: Brouwer, Hendrik Rogier
Geulhemmerweg 5A
NL-6325 PH Valkenburg a/d Geul(NL)

(54) Process for the preparation of composite materials.

(57) The invention relates to a process for the preparation of composite material, comprising the introduction of fibrous material in a mould, closing the mould, injecting a thermosetting resin containing bismaleimide compound into the mould by applying a pressure differential, and allowing the resin to cure, characterized in that the mould has a temperature of 10-40°C and that the resin has a viscosity of less than 200 mPa.s.

## PROCESS FOR THE PREPARATION OF COMPOSITE MATERIALS

The invention relates to a process for the preparation of composite materials, comprising the introduction of fibrous material in a mould, closing the mould, injecting a thermosetting resin containing bismaleimide compound into the mould by applying a pressure differential, and allowing the resin to cure.

Such a process is described in the report of the 32nd SAMPE symposium, held April 6-9, 1987 (K.D. Potter and F.C. Robertson: "Bismaleimide Formulations for Resin Transfer Moulding"). The preparation technique, mostly referred to as 'RTM', is performed at elevated temperature there (125☐C) in order to ensure that the bismaleimide containing composition has a viscosity of around 2.5 Pa.s.

Composite materials obtained by said process are mostly only produced in small amounts. It is a great drawback that because of the heat to be supplied a relatively costly mould has to be produced or that the entire rig has to be placed in an oven. Moreover, fairly accurate temperature control is required in order to prevent viscosity deviations.

These problems are obviated according to the invention because the process for the preparation of composite material, by introducing fibrous material in a mould, closing the mould, injecting a thermosetting resin containing bismaleimide compound into the mould by creating a pressure differential, and allowing the resin to cure, is characterized in that the mould has a temperature of 10-40☐C and that the resin has a viscosity of less than 200 mPa.s.

Preferably, the mould has the ambient temperature.

The dimensional stability of the products obtained by the process according to the state of the art often does not meet the high standards set in the aviation industry, unless the design of the mould allows for the differential expansion coefficients of the materials used, because the mould is first heated for the injection, then heated for the curing, and finally cooled. The process according to the invention offers the additional advantage that these problems do not occur.

A second advantage is that the quality of the impregnation (wetting of the fibres) can be improved. Air inclusions hardly occur any more, owing to a low viscosity and because the gelation time of the thermosetting resin at room temperature can be chosen as long as desired, so that the gelation step can take more time, if desired.

It is of advantage to set the viscosity of the resin between 10 and 100 MPa.s, so that the impregnation step will be accomplished as effectively and rapidly as possible.

The pressure differential that is applied in the process according to the invention is in practice mostly chosen between 0.5 and 5 bar, by optionally creating a vacuum in the mould and/or injecting under pressure. In the process according to the state of the art a higher pressure is applied because the resin, in spite of the higher temperature, has such a high viscosity. The lower pressure offers the advantage that the mould can be of simpler design and that, in addition, the fibrous material remains better in place in the mould.

The fibrous material chosen preferably is material with a good temperature resistance, such as glass fibre, carbon fibre, aramide fibre and the like. Owing to the low viscosity of the resin it is now possible at room temperature to manufacture a product with 50-70 vol.% fibrous material. The process according to the invention can also be implemented of course with less fibrous material; mostly, more than 30 vol.% fibrous material is used then.

Suitable bismaleimide compounds are for instance those that are described in EP-A-135.964, US-A-4.298.720 and US-A-4.244.427. Preference is given to a bismaleimide compound described in EP-A-135.964.

Viscosity can be reduced by adding a viscosity reducing compound. As viscosity reducing compound, for instance a bismaleimide oligomer can be chosen, or for instance an ethylenically unsaturated monomer with less than 30 carbon atoms. As ethylenically unsaturated monomer, a monomaleimide compound of an aromatic or aliphatic mono amine or diamine can be chosen. These are described for instance in EP-A-135964, DE-A-3012179, FR-A-2031538 and US-A-4593038.

Other suitable ethylenically unsaturated monomers are vinylaromatic compounds, alkyl(meth)-acrylate, hydroxyalkyl(meth)acrylate, divinyl and di- and triallyl compounds. Examples hereof are styrene, α-methylstyrene, p-methylstyrene, chlorostyrene, hydroxy- or aminoalkylstyrene, hexyl(meth)acrylate, ethyl(meth)acrylate, hydroxyethyl(meth)acrylate, divinylbenzene, diallylisocyanurate, triallylcyanurate, divinylester of maleic acid, trimethylpropanetriacrylate, etc.

Other suitable monomers are maleic acid anhydride and unsaturated epoxy compounds, such as described for instance in DD-A-235881.

Preferably, mixtures of ethylenically unsaturated monomers are used, more in particular a mixture of a monomaleimide compound and one or more other unsaturated monomers.

Further, impact modifiers may be added to said mixture, such as amino-terminated rubbers.

Examples of applicable rubbers are described for instance in EP-A-206383 and WO-A-8402528. This may cause some increase in the viscosity of the resin mixture, however.

The polymerization can be started by, for example, a radical initiator. Depending on the temperature (for instance 20-40◻C) and the quantity (for instance 2-10 wt.%), a gelation time of between 80 and 6 minutes can be obtained. After the polymerization at room temperature the product can be taken from the mould and aftercured, for instance at temperatures of 70◻C, 130◻C and 200◻C for 2, 4 and 8 hours.

The composite materials obtained by the process according to the invention can be used for instance in the aviation industry, the automotive industry and other branches of industry where high temperature resistance is required, it now being possible to manufacture products of intricate geometrical shapes in an economically interesting way.

The invention will be further elucidated with reference to the example, without being restricted thereto.

Example

A resin mixture was obtained by admixing 45 parts by wt. of bismaleimide-containing solid, obtained as described in Example I of EP-A-206383, 35 parts by wt. of styrene and 20 parts by wt. of hydroxyethylmethacrylate. Immediately before the injection, 2 parts by wt. of initiator (Trigonox HM[R]) were added. The gelation time of the resin was at least 60 minutes.

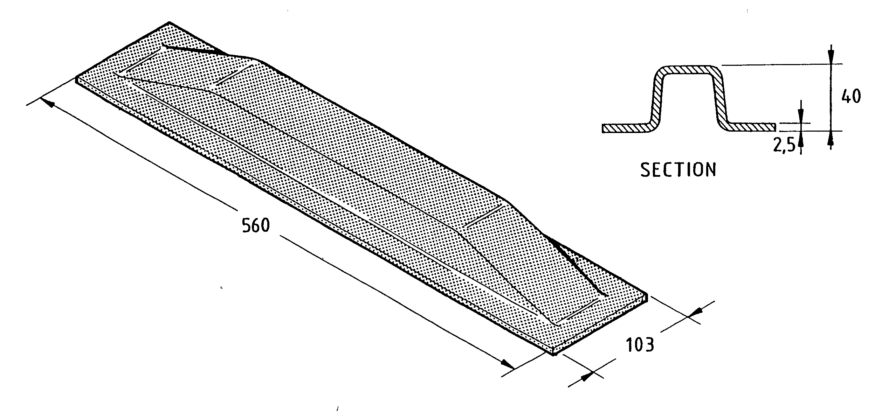

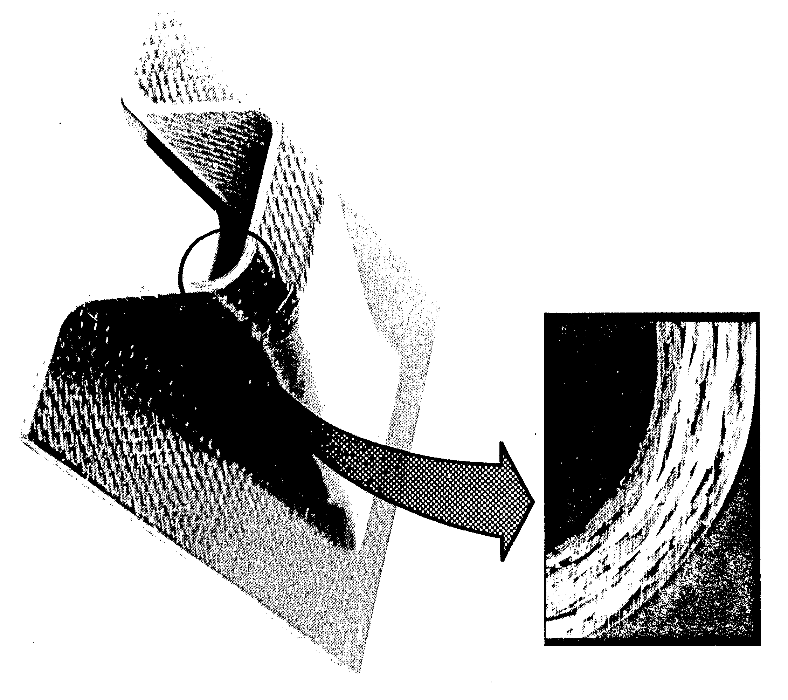

60 vol.% carbon fibre (Interglas 8. Harness, type 98166, 365 g/m$^2$) was laid in a complex mould and at a pressure of 300 kPa (3 bar) the above-described resin mixture was injected. During the curing in the mould the resin was now kept under a pressure of 300 kPa. This resulted in a product with an exactly reproduced shape, as represented on the accompanying drawing. The air inclusions amounted to less than 0.5 vol.%. As can be seen on the accompanying photo, there are no air inclusions.

The product was aftercured outside the mould at 70, 130 and 200◻C for 8 hours, 8 hours and 8 hours, respectively. The glass transition temperature of the product was 250◻C (DMA).

Claims

1. Process for the preparation of composite material, comprising the introduction of fibrous material in a mould, closing the mould, injecting a thermosetting resin containing bismaleimide compound into the mould by applying a pressure differential, and allowing the resin to cure, characterized in that the mould has a temperature of 10-40◻C and that the resin has a viscosity of less than 200 mPa.s.

2. Process according to claim 1, characterized in that the mould has the ambient temperature.

3. Process according to any one of the claims 1-2, characterized in that the viscosity of the resin is 10-100 mPa.s.

4. Process according to any one of the claims 1-3, characterized in that the pressure differential is chosen between 0.5 and 5 bar.

5. Process according to any one of the claims 1-4, characterized in that 50-70 vol.% fibrous material is used.

6. Process as substantially described in the specification and the example.

7. Product to be obtained by application of a process according to any one of the claims 1-6.

560

103

40

2,5

SECTION

EP 0 331 267 A1

EP 0 331 267 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 148 534 (UNION CARBIDE) <br> * Page 21, line 20 - page 22, line 32; claims * <br> --- | 1-7 | B 29 C 67/14 <br> C 08 J 5/04 <br> B 29 C 35/18 // <br> B 29 K 79/00 |
| D,X | EP-A-0 135 964 (DSM RESINS) <br> * Page 11, lines 3-14; claims * <br> --- | 1-7 | |
| Y | FR-A-2 304 639 (RHONE-POULENC) <br> * Page 6, lines 1-4; claims * <br> --- | 1-7 | |
| D,Y | 32ND INTERNATIONAL SAMPE SYMPOSIUM, Anaheim, California, April 1987, pages 1-12; K.D. POTTER et al.: "Bismaleimide formulations for resin transfer moulding" <br> * Page 4, right-hand column, item 4.3 - page 6, left-hand column, item 5 * <br> --- | 1-7 | |
| A | DE-A-2 134 389 (BRITISH AIRCRAFT) <br> * Whole document * <br> --- | 1-7 | |
| A | US-A-4 233 258 (T.L. St. CLAIR) <br> * Whole document * <br> ----- | 1-7 | TECHNICAL FIELDS SEARCHED (Int. Cl.4) <br><br> B 29 C <br> C 08 J <br> C 08 L |

The present search report has been drawn up for all claims

| Place of search | Date of completion of the search | Examiner |
|---|---|---|
| THE HAGUE | 05-06-1989 | LABEEUW R.C.A. |